# DEMANDE DE BREVET EUROPEEN

(11) **EP 4 282 612 A1**
(43) Date de publication de la demande: **29.11.2023**
(21) Numéro de dépôt: 23175210.6
(22) Date de dépôt: 24.05.2023
(51) Int. Cl.: B29C 43/00, B29C 43/14, B29C 45/14, B29B 17/00, B29C 43/52, B29K 105/08, B29K 105/26, B29L 31/30

(54) **REVÊTEMENT POUR PIÈCES VISIBLES**

(30) Priorité: 27.05.2022 FR 2205094
(71) Demandeur: Eurostyle Systems Tech Center France, 36000 Châteauroux (FR)
(72) Inventeur: FRAUDET, Sébastien, 36330 Le Poinçonnet (FR)
(74) Mandataire: Berger, Helmut

(57) **Abrégé**

Procédé de fabrication d'une pièce d'habillement pour une structure, comprenant une étape d'assemblage d'une structure thermoplastique à l'arrière d'une couche d'aspect extérieur. La couche (20) est formée préalablement par pressage (E3) entre deux plateaux chauffants (E2) d'un mélange thermoplastique (10). La pièce est une pièce d'intérieur d'habitacle ou d'extérieur du véhicule.

## Description

L'invention porte, dans divers secteurs d'application, sur les pièces visibles d'objets de diverses natures auxquelles on souhaite donner une apparence attractive, pour valoriser l'objet ou attirer les regards. L'invention s'applique en particulier aux véhicules, notamment les véhicules automobiles, que ce soit pour les pièces intérieures, dans l'habitacle, que leurs éléments visibles à l'extérieur. L'invention s'applique aussi dans des contextes commerciaux avec des présentoirs de produits, des stands, des chevalets, des placards publicitaires de type PLV (publicité sur le lieu de vente), des flacons et des emballages. Ces pièces ont un rôle esthétique, par lequel elles habillent et donc valorisent les objets pour les clients ou les utilisateurs, de par leur aspect attractif. Leur surface peut classiquement être matte ou brillante, peinte, ou définie par un revêtement, comme un textile tissé ou non, une feuille synthétique ou un cuir, mais l'invention apporte, en rupture par rapport à ces solutions, de nouvelles méthodes originales et valorisantes à l'aspect de ces pièces.

Dans le domaine automobile, on s'intéresse aux pièces d'habitacle - et donc intérieures au véhicule concerné qui est dans ce cas souvent une automobile, ou encore un camion ou un autre véhicule terrestre ou non. La pièce d'habitacle peut être une planche de bord, une console centrale ou une garniture de porte, auquel cas on cherche un effet de confort pour les passagers. On s'intéresse aussi aux pièces d'extérieur, comme des éléments de carrosserie ou des inserts décoratifs extérieurs, ou des protections de porte, auquel cas la surface de la pièce doit être adaptée aux conditions extérieures, qui incluent les intempéries.

Couramment, ces pièces peuvent être formées en plastique moulé par injection, la matière formant le corps de la pièce étant choisie dans la famille des thermoplastiques comme le polypropylène (PP) très couramment utilisé, ou dans diverses applications, le polycarbonate (PC), l'acrylonitrile butadiène styrène (ABS) ou encore le polyamide (PA) ou le polyéthylène (PE), et constituant donc un dérivé du pétrole. Longtemps, un polymère neuf et homogène (vierge) a été utilisé, ce qui donne un aspect uniforme à la surface qui est visible.

Le polymère de plus contient un pigment, dilué de manière homogène. Différents pigments existent, ce qui permet de faire des pièces de différentes couleurs, bien différenciées. Le produit est obtenu, auprès d'un fournisseur, initialement souvent sous forme de granulés, qui sont des petits volumes approximativement sphériques - produits souvent par extrusion et coupe - et il est fondu et coagulé par un chauffage dans un moule d'injection. Il conserve lors de la mise en forme un aspect homogène donnant un aspect neuf à la pièce.

Néanmoins, dans le contexte d'une économie et de contraintes matérielles qui sont telles que les matières premières sont plus rares et doivent être recyclées, ce qu'on appelle l'économie circulaire, il est de plus en plus pratiqué de construire la structure de la pièce sur la base d'une structure composite incluant des fibres naturelles ou en utilisant des plastiques récupérées, par exemple des éléments récupérés lors du démontage d'un véhicule en fin de vie. Il s'agit là de deux solutions différentes, éventuellement combinables, dont la mise en oeuvre est dictée par les circonstances entourant le produit à fabriquer, et la disponibilité et le coût des matières premières.

Mais il est intéressant également de rechercher à utiliser des matières non utilisées issues de sources diverses, comme des chutes non valorisées dans un processus industriel utilisant une résine vierge, de différentes couleurs, ou des éléments de fin de production, ou issus de rebus, ou de déchets de production série.

Malheureusement, utiliser une telle matière première de récupération pour mouler le corps d'une pièce d'aspect dans un moule à injection donne couramment un résultat qui n'est pas très valorisant visuellement : la pièce présente généralement des traces de flux matière appelées « tiger stripes » (« rayures ou griffures de tigre »), des problèmes de recollement de la matière, ou des défauts d'aspects dû à la non-homogénéité de la matière issue de la récupération. Il est de plus difficile d'atteindre une forte répétabilité à tout point de vue au sein d'une production en série. Dans un processus d'injection traditionnel, il est en effet difficile d'obtenir un aspect répétable avec de la matière première récupérée. Les lignes de flux de matière sont en effet dessinées de façon aléatoire, et elles sont visibles. On ne parvient pas à obtenir un effet moucheté, qui serait à l'inverse valorisant. On n'est donc que peu intéressé par l'utilisation de cette matière première issue de la récupération avec un processus semblable à l'art antérieur.

Il n'en reste pas moins qu'on connait des matières écoresponsables qui peuvent être utilisées pour former le corps d'une pièce, sans pour autant être parfaitement adaptées sur le plan visuel, comme par exemple les plaques de composites thermoplastiques avec fibres naturelles, ou encore les granulés de polymère recyclé, qui ne sont néanmoins pas très disponibles sur le marché des matières premières.

Pour résoudre ce problème de la valorisation optimisée des matières, et donc fournir des produits éco-responsables et attractifs, il est proposé ici des pièces incorporant des matières récupérées et d'apparence améliorée, pour l'automobile et d'autres secteurs d'application, comme la publicité sur le lieu de vente, l'emballage ou le flaconnage. Celles-ci sont optimisées pour minimiser la consommation des produits pétroliers, et mettre en avant, vis-à-vis de l'utilisateur, l'utilisation de matière recyclée, de manière attractive et favorable.

De plus, on propose un produit dans lequel un seul type de matière synthétique, ou un nombre limité de type de matières synthétiques, est présent finalement, ce qui permet de recycler ces matières en fin de vie, puisqu'il n'y a pas besoin de séparer un nombre trop important de matières.

Ainsi, on propose ci-après un procédé de fabrication d'une pièce d'habillement pour une structure, comprenant une étape d'assemblage d'une structure thermoplastique à l'arrière d'une couche d'aspect extérieur.

Il s'agit là de principes connus et qui ont l'avantage de la simplicité : la structure, étant cachée par la couche d'aspect, peut avoir une apparence visuelle quelconque, mais être sélectionnée pour optimiser ses propriétés mécaniques excellentes obtenues par des méthodes bien connues, maîtrisées et peu chères, du fait de sa nature thermoplastique qui permet sa mise en forme par des techniques classiques et si besoin avec les renforts nécessaires. De plus, cela peut être obtenu avec des matériaux écoresponsables. Mais cette partie technique reste cachée, puisque l'apparence est obtenue par l'utilisation d'une couche d'aspect extérieur qui peut être fabriquée indépendamment, et qui de par sa nature de couche, est économe en matière, légère et peu influente sur les propriétés mécaniques de l'ensemble. Et la présence de cette couche permet de cacher l'apparence qui peut être peu attractive de la structure.

De par ses propriétés mécaniques, qui reflètent celles de la structure thermoplastique placée à l'arrière, le produit final constitue lui-même une structure, à l'apparence améliorée.

Différentes techniques d'assemblage d'une structure thermoplastique sur une couche de matière existent, notamment le surmoulage (réaliser un moulage sur un produit déjà fini, en injectant du plastique sur un insert métallique, plastique ou céramique notamment), ou encore la thermocompression ou moulage par compression (mise en place dans un moule initialement ouvert d'un volume de la matière, qui est chauffé puis pressé par la fermeture du moule).

De manière remarquable, selon l'invention, la couche d'aspect extérieur est formée préalablement par pressage, entre deux plateaux chauffants horizontaux, d'un mélange thermoplastique comprenant des morceaux de pièces thermoplastiques de récupération broyées et dispersées sur le plateau inférieur.

Cela est très original, et offre une grande possibilité de réalisations diverses, tout en définissant un procédé simple et efficace. Ce principe permet d'obtenir un effet moucheté original avec différentes couleurs, jamais obtenu auparavant, très décoratif.

Le mélange thermoplastique hétérogène peut comprendre plusieurs couleurs juxtaposées, de par l'inclusion de pièces de récupération de différentes sources et par conséquent souvent de différentes couleurs, ce qui définit son hétérogénéité. Il peut comprendre aussi du polymère vierge, en plus des pièces récupérées, formant une couleur supplémentaire. L'ensemble est broyé en granula avant d'être dispersé sur le plateau inférieur. Il y a au moins deux couleurs différentes. Ainsi le mélange est visuellement hétérogène et il comprend plusieurs couleurs juxtaposées, par l'inclusion de morceaux de pièces de récupération de différentes couleurs. Ainsi, l'hétérogénéité se retrouve dans la couche, qui met en avant les différentes couleurs les unes à côté des autres, non noyées les unes dans les autres et donc visibles séparément.

L'invention peut aussi être mise en oeuvre avec des inclusions de matières de diverses natures. Ainsi, l'hétérogénéité se retrouve dans la couche, qui met en avant les inclusions de matières ajoutées, qui sont visibles à la surface de la couche. Cela résulte du fait que celle-ci a été préparée par le procédé, entre les deux plateaux chauffants, qui sont pressés l'un contre l'autre pour produire une couche continue d'épaisseur uniforme, et de surface qui peut être lisse et en tout cas régulière. Ainsi, le mélange est visuellement hétérogène et il comprend des morceaux de textile, des morceaux de roseau, des morceaux de liège, des morceaux de cuir, des morceaux de coquilles, visibles, mélangés aux morceaux de pièce thermoplastiques.

Et le fait que cela ait été réalisé avant (préalablement à) l'assemblage offre une maîtrise fine de la fabrication de la couche.

Enfin, l'aspect est assez variable d'un exemplaire à un autre, du fait du caractère aléatoire induit par l'hétérogénéité du mélange. Sont visibles, sur la surface, différentes couleurs issues des différentes pièces plastiques de récupération utilisées initialement, en plus d'un ajout éventuel de plastique vierge et/ou différentes inclusions, comme du textile, du roseau, du cuir, des coquilles, du liège, apparaissant de manière aléatoire.

Quant à la pièce de structure, elle est formée de préférence avec des matériaux éco-responsables, comme des composites intégrant des fibres naturelles ou des matériaux de qualité coproduits secondairement par un processus industriel.

Selon des caractéristiques avantageuses et optionnelles,
- le mélange est visuellement hétérogène et il comprend dans les granulés des couleurs différentes et des inclusions de matière non plastique ;
- l'assemblage peut être une thermocompression de la couche d'aspect extérieur avec une couche thermoplastique de structure ; - la couche thermoplastique de structure peut alors être une couche d'une matrice de polypropylène renforcé de fibres naturelles, ou une couche de non-tissé de fibres de polyester (PES) et polypropylène ;
- l'assemblage peut être un surmoulage d'une injection de matériau thermoplastique ; - le matériau thermoplastique injecté peut alors être un polypropylène injecté, un l'acrylonitrile butadiène styrène, un polycarbonate, ou un polyéthylène, notamment sous forme de granulés issus du recyclage, ou sous forme de chutes de matières (c'est-à-dire des coproduits non valorisés en première intention) issues de l'activité d'une usine de production de composants, notamment de composants automobiles.

L'invention offre ainsi une pièce d'habillement pour véhicule ou d'une autre structure, comprenant une structure thermoplastique à l'arrière d'une couche d'aspect extérieur. De manière originale, la couche d'aspect extérieur est régulière et a un aspect hétérogène.

On précise que la structure thermoplastique peut être constituée d'une matière chargée, par exemple avec des particules minérales, ou non chargée.

La pièce peut être une pièce automobile, du type panneau de porte, console centrale, ou planche de bord. La pièce peut de manière générale être une pièce d'intérieur d'habitacle ou de carrosserie. Elle peut aussi être un flacon ou un emballage, ou un présentoir de PLV.

L'invention va maintenant être décrite en relation avec les figures annexées, qui sont fournies à titre illustratif et non limitatif.

La figure 1 est une représentation schématique des éléments préliminaire de la mise en oeuvre d'un procédé selon l'invention.

Les figures 2 et 3 sont des représentations schématiques des éléments préliminaires de la mise en oeuvre d'un procédé selon l'invention.

Les figures 4 et 5 sont des visuels de surfaces obtenues selon les méthodes de l'invention.

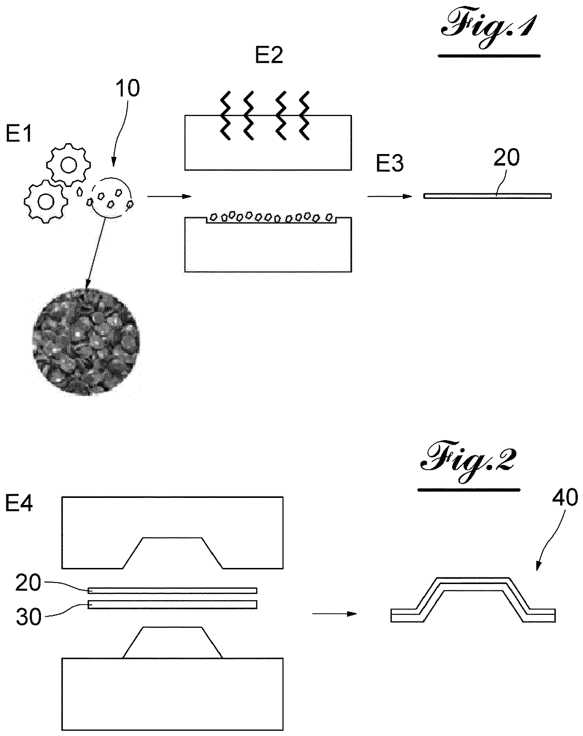

[Fig. 1] En figure 1 on a représenté une phase préliminaire et essentielle du procédé selon l'invention, utilisée pour tous les modes de réalisation de celui-ci.

Des morceaux de matière thermoplastique 10 sont utilisés, et ils sont par exemple fabriqués par une étape de broyage, E1, de matières récupérées, issues du site industriel concerné ou d'un site proche, comme des chutes, des rebuts, des déchets de la production série. Ils peuvent être alternativement obtenus d'un producteur de produits polymères qualifiés de « compound » - il peut s'agir d'un mélange dont la base est du polyéthylène haute densité ou un bioplastique, ou tout autre base thermoplastique. Les granulés ou les rebuts peuvent contenir - ou on peut y ajouter en vue de la presse - des fibres ou des charges minérales, comme du roseau, des coquilles, ou des coproduits de l'industrie, comme des chutes de pièces de cuir, de textiles ou d'autre plastiques, ou des fibres comme la laine ou les fibres de polyester, des fibres synthétiques, des fibres naturelles. La qualité est contrôlée.

Essentiellement, la matière utilisée est visuellement hétérogène. Cet aspect sera discuté ci-après.

Ces granulés sont placés dans une presse, au cours d'une étape E2. La presse utilisée est un ensemble de plateaux chauffants : un plateau inférieur plan, plat, placé horizontalement, et un plateau supérieur plan également. Les plateaux sont amenés à une température suffisante pour permettre la fusion de la matière des granulés de matière thermoplastique 10. Les morceaux issus du broyage sont de plus placés et répartis sur le plateau inférieur de manière assez uniforme, pour au final permettre la formation par le pressage du plateau supérieur sur le plateau inférieur d'un film continu, non troué, de matière thermoplastique 20 mouchetée. Le mouchetage est obtenu car le plastique n'a pas été étiré à travers une filière ou entre deux rouleaux, mais pressé entre deux plaques, ce qui a permis de conserver visible l'hétérogénéité initiale du mélange thermoplastique.

Lors de la descente du plateau supérieur, les granulés sont fondus et on obtient, au cours d'une étape E3, ainsi le produit qui a l'aspect d'une feuille plus ou moins épaisse, en fonction du réglage de la presse (pression et température, ainsi que durée).

L'épaisseur précise du film 20 de matière thermoplastique peut être adaptée en fonction de la quantité de matière introduite entre les deux plateaux de la presse et de la pression qui est appliquée par le plateau supérieur sur le plateau inférieur. Ainsi le film peut avoir l'aspect d'une plaque. L'épaisseur du film ou de la plaque est en général uniforme sur toute la surface, et cela est obtenu si le plateau supérieur a une surface parallèle à la surface, placée horizontalement, du plateau inférieur. De plus, sauf à ce que la surface du plateau supérieur ait été travaillée pour présenter une rugosité, la couche est d'aspect lisse. En tout cas, elle est régulière.

Essentiellement, comme on l'a dit, la matière utilisée est hétérogène, et l'épaisseur du film ou de la plaque est suffisamment fine pour que, compte tenu de l'échelle de l'hétérogénéité de la matière première, celle-ci reste visible à l'issue de la compression, tout en obtenant une cohésion mécanique suffisante pour que la plaque puisse être déplacée et utilisée dans les étapes ultérieures du procédé, et soit également résistante en surface une fois le produit final terminé.

Ce film constitue un décor visant à mettre en valeur l'aspect écoresponsable de la pièce de structure sur laquelle il va être apposé. En effet, sont visibles, sur la surface, différentes couleurs issues des différentes pièces plastiques utilisées initialement, et/ou différentes inclusions, comme du textile, du roseau, du cuir, des coquilles, du liège.

Le pressage peut être maintenu 50 secondes à 2 minutes, à une température des plateaux préalablement établie entre 190 et 220°C, par exemple, et une pression entre les deux plateaux qui peut être de 2 à 3 bars.

[Fig. 2] En figure 2 on a représenté une étape de thermocompression E4 dans un moule, qui constitue la mise en oeuvre d'un premier mode particulier de l'invention, utilisant le film (ou la plaque) fabriqué(e) en figure 1.

Ainsi dans un moule de forme comportant une première empreinte ou forme et une deuxième empreinte complémentaire ou contre-forme de la première on met en place la feuille 20 et une plaque de fibre naturel NFPP (Natural fiber and polypropylene, matière thermoplastique renforcée de fibres naturelles) 30. La plaque de NFPP peut être d'une épaisseur de 2 à 3 mm maximum après la thermocompression, l'essentiel étant d'assurer la fonction de structuration et maintien structurel de la pièce qui est formée à ce moment-là. Après la thermocompression, le film de décor est incrusté dans l'épaisseur de l'ensemble composite le tout constituant une pièce variant de 2 à 3,5 mm d'épaisseur.

La feuille 20 et la plaque 30 sont placées parallèlement l'une à l'autre et on leur applique ensuite la déformation provoquée par les formes du moule, notamment des formes complémentaires des deux parties du moule de forme.

On obtient à l'issue de cette étape de thermocompression, réalisée en présence de chaleur dans le moule, une pièce composite 40 de la géométrie souhaitée et présentant deux faces : une face extérieure continue formée par le film 20 auquel le moule a donné la forme souhaitée, et une face intérieure formée par la plaque 30, à laquelle également la forme souhaitée a été donnée par le moule.

Les deux épaisseurs, la feuille 20 et la plaque 30, sont à l'issue de l'étape E4 solidarisées intimement sur toutes leurs surfaces mises en contact, de par la compatibilité physico-chimique des matériaux choisis à cette fin.

A la place du NFPP, on peut utiliser un non-tissé synthétique de polyester et polyéthylène. Celui-ci une fois compressé a une résistance et une rigidité suffisantes pour constituer un élément structurel d'habitacle. Sa matière est issue du recyclage de fibres utilisées dans d'autres circonstances. De plus, les matériaux des deux couches sont suffisamment proches chimiquement pour assurer une bonne cohérence sur le long terme après le traitement thermique de fixation.

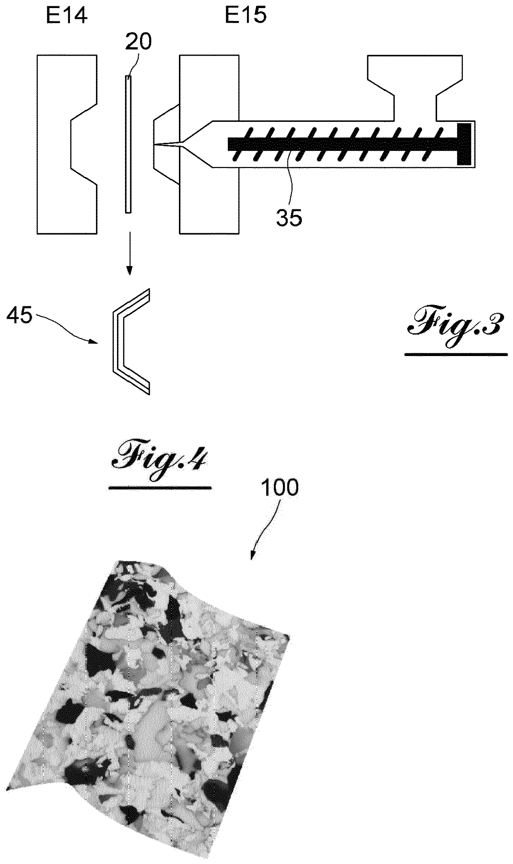

[Fig. 3] En figure 3 on a représenté une étape d'un deuxième mode de réalisation de l'invention alternatif au mode de réalisation représenté en figure 2, et qui fait donc suite aux étapes de la figure 1. Au cours de cette étape E14 d'injection la feuille de matériau thermoplastique 20 est placée seule entre la partie mâle et la partie femelle d'un moule d'injection. A nouveau une chaleur est appliquée, mais en plus le moule est équipé de buses d'injection et on pratique sur l'une des faces de la feuille de matériau thermoplastique 20 une injection d'un matériau (de préférence recyclé) 35 injectable (liquide), aux caractéristiques thermoplastiques. Il s'agit d'un polymère qui peut éventuellement être chargé, par exemple un polypropylène, dont les caractéristiques sont choisies en fonction de la destination dans l'assemblage final. Il résulte de ce processus d'injection couplé à un thermomoulage, la préparation d'un élément composite 45 formé par le surmoulage d'une couche de matériau thermoplastique neuf ou recyclé au contact de la feuille de matériau thermoplastique 20 issue de la figure 1. Les deux couches de matière sont intimement liées de par leur compatibilité physico-chimique, de par la compatibilité physico-chimique des matériaux choisis à cette fin, et la forme est dictée par les empreintes présentes dans le moule de thermocompression.

On obtient un produit dans lequel essentiellement un seul type de matière est présent finalement, ce qui permet de le recycler en fin de vie, puisqu'il n'y a pas besoin de séparer différentes matières. Par exemple la couche d'aspect extérieur est fabriquée à partir de chutes diverses et hétérogènes de polypropylène récupéré et la couche structurelle est en polypropylène neuf pour garantir les tenues mécaniques et dimensionnelles de la pièce quand une source d'approvisionnement en matière recyclée ne le permet pas.

Et on peut appliquer les principes de l'invention au polycarbonate, à l'acrylonitrile butadiène styrène ou encore au polyamide ou au polyéthylène.

[Fig. 4] En figure 4 on a représenté une possibilité d'aspect mise en oeuvre dans l'invention. On voit une feuille thermoplastique 100 avec une surface très valorisante pour le design dans le domaine des surfaces internes de l'automobile, ou également sur les surfaces externes de véhicules.

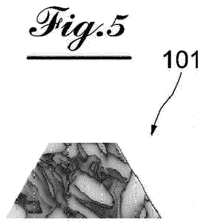

[Fig. 5] La figure 5 représente également une alternative, avec une surface 101 présentant un aspect visible de type matière récupérée. On précise que le produit n'est pas nécessairement rigide : il peut être souple : « soft » ou mou.

Finalement, le procédé selon l'invention, dans le premier et ou le deuxième de ces modes de réalisation permet la mise au point de nouveaux éléments d'habitacle pour véhicule automobile, ou également de nouveaux éléments de carrosserie externe pour le véhicule automobile. Les matières issues de la production de série et non utilisées en première intention peuvent être utilisées sous forme de matière récupérée pour faire une plaque ou un film plastique. Un effet esthétique innovant est obtenu, comme cela ressort des figures 4 et 5. La quantité de matière neuve utilisée est diminuée.

La matière récupérée est mise en valeur pour le client final qui perçoit l'aspect d'économie circulaire, qui est intéressante pour la satisfaction de l'achat. Un effet décoratif de différents types peut être obtenu en fonction du choix de la matière première utilisée. La pièce concernée peut être, outre les exemples envisagés ci-dessus, également un élément d'une baguette de porte, d'un accoudoir, ou un médaillon de portière. Les deux solutions que sont le surmoulage et la thermocompression sont complémentaires, et permettent de s'adapter à la matière structurelle qu'il a été choisi d'utiliser, et à la géométrie demandée par les concepteurs du produit final. Au final, la pièce est solide structurellement, sa fabrication est économe en matière première et son aspect est décoratif et nouveau et met en valeur l'aspect éco-responsable de la pièce pour faire percevoir par le client final l'utilisation respectueuse des matériaux et l'économie circulaire dans laquelle s'insère la pièce.

## Revendications

1. Procédé de fabrication d'une pièce d'habillement (40 ; 45) pour une structure, comprenant une étape d'assemblage (E4 ; E14) d'une structure thermoplastique (30 ; 35) à l'arrière d'une couche d'aspect extérieur (20), **caractérisé en ce que** la couche d'aspect extérieur (20) est formée préalablement par pressage (E3) entre deux plateaux chauffants horizontaux (E2) d'un mélange comprenant des morceaux de pièces thermoplastiques de récupération (10) broyées (E1) et dispersées sur le plateau inférieur.

2. Procédé de fabrication d'une pièce d'habillement pour une structure selon la revendication 1, **caractérisé en ce que** le mélange est visuellement hétérogène (10) et il comprend plusieurs couleurs juxtaposées, par l'inclusion de morceaux de pièces de récupération de différentes couleurs.

3. Procédé de fabrication d'une pièce d'habillement pour une structure selon la revendication 1, **caractérisé en ce que** le mélange est visuellement hétérogène et il comprend des morceaux de textile, des morceaux de roseau, des morceaux de liège, des morceaux de cuir, des morceaux de coquilles, visibles, mélangés aux morceaux de pièce thermoplastiques.

4. Procédé de fabrication d'une pièce d'habillement pour une structure selon l'une des revendications 1 à 3, **caractérisé en ce que** l'assemblage (E4) est une thermocompression de la couche d'aspect extérieur (20) avec une couche thermoplastique de structure (30).

5. Procédé de fabrication d'une pièce d'habillement pour une structure selon la revendication 4, **caractérisé en ce que** la couche thermoplastique de structure (30) est une couche d'une matrice renforcée de fibres naturelles.

6. Procédé de fabrication d'une pièce d'habillement pour une structure selon la revendication 4, **caractérisé en ce que** la couche thermoplastique de structure (30) est une couche de non-tissé de fibres de polyester et polypropylène.

7. Procédé de fabrication d'une pièce d'habillement pour une structure selon la revendication 1 ou la revendication 2, **caractérisé en ce que** l'assemblage (E14) est un surmoulage de matériau thermoplastique (35).

8. Procédé de fabrication d'une pièce d'habillement pour une structure selon la revendication 7, **caractérisé en ce que** le matériau thermoplastique est un polypropylène issu de chutes coproduites par une production en usine de composants.

9. Procédé de fabrication d'une pièce d'habillement pour une structure selon l'une des revendications 1 à 7, **caractérisé en ce que** la pièce (40 ; 45) est une pièce d'intérieur d'habitacle ou d'extérieur de véhicule.

10. Pièce d'habillement (40 ; 45) pour une structure, laquelle pièce (40 ; 45) est obtenue par la mise en oeuvre du procédé selon l'une quelconque des revendications 1 à 9 et comprend une structure thermoplastique (30 ; 35) à l'arrière d'une couche d'aspect extérieur (20), laquelle couche d'aspect extérieur (20) est régulière et a un aspect hétérogène (10).

11. Pièce d'habillement selon la revendication 10, **caractérisée en ce que** la pièce est une pièce automobile, du type panneau de porte, console centrale, ou planche de bord.
